# EUROPEAN PATENT SPECIFICATION

(11) **EP 2 956 369 B1**
(45) Date of publication and mention of the grant of the patent: **02.12.2020**
(21) Application number: 14714343.2
(22) Date of filing: 14.02.2014
(51) Int. Cl.: B65C 3/06, B29C 53/44, B29C 65/08, B29C 65/16, B29C 65/14, B29C 63/42, B29C 65/78

(54) **METHOD OF PRODUCING SHRINK SLEEVE LABELS AND DEVICE FOR THEIR PRODUCTION**
VERFAHREN UND VORRICHTUNG ZUR HERSTELLUNG VON SCHRUMPFFOLIENETIKETTEN
PROCÉDÉ POUR LA PRODUCTION D'ÉTIQUETTES-MANCHONS ET DISPOSITIF POUR LEUR PRODUCTION

(30) Priority: 15.02.2013 IT VR20130042; 08.03.2013 IT VR20130057
(43) Date of publication of application: 23.12.2015
(73) Proprietor: Sacmi Verona S.P.A., 40026 Imola (IT)
(72) Inventor: PEDERCINI, Maurizio, I-46045 Marmirolo (IT); PARRINELLO, Fiorenzo, I-40059 Medicina (IT); FARINA, Andrea, I-37069 Villafranca Di Verona (IT); FISOGNI, Martino, I-37060 Buttapietra (IT); ALBERTAZZI, Simone, I-40026 Imola (IT); FIORINI, Maurizio, I-40011 Anzola Dell'emilia (IT); CAMPANA, Giampaolo, I-40129 Bologna (IT); PAGANO, Nunziante, I-84061 Ogliastro Cilento (IT); IEMMELLO, Antonella, I-20018 Sedriano (IT)
(74) Representative: Modiano, Micaela Nadia
(86) International application number: PCT/IB2014/058991
(87) International publication number: WO 2014/125439

(56) References cited:
- EP-A1- 0 688 720
- EP-A1- 1 626 076
- EP-B1- 1 954 572
- WO-A1-95/27613
- WO-A1-2010/047905
- WO-A1-2012/165004
- WO-A2-2007/087174
- WO-A2-2010/147891
- US-A- 4 686 931
- US-A- 4 976 798
- US-A- 5 415 721
- US-A1- 2004 200 566

## Description

The present invention relates to a method of producing shrink sleeve labels.

Typically, "shrink sleeve" labels are made of polymeric material such as polyethylene terephthalate (PET), polyvinyl chloride (PVC), polypropylene (PP), polystyrene (PS), or other materials that are adapted to being heat-shrunk.

The term "shrink sleeve" is used to mean tubular labels of plastic film which are fitted around a container and are subsequently heated so as to shrink onto the outer surface of the container and assume the shape of the outer surface of that container.

A first method for obtaining shrink sleeve labels involves starting with a film of heat-shrink plastic material which is unwound from a reel in order to be fed, using a movement device, to a transfer drum.

A cutting device, which is usually arranged upstream of the transfer drum, cuts the plastic film transversely to the advancement direction so as to obtain portions of plastic film that have a preset length as a function of the size of the container to be labeled.

By way of the transfer drum, the portions of film are transferred to a carousel that is provided with a plurality of spindles, which are conveniently arranged on the peripheral region of the carousel, and are shaped to receive portions of plastic film from the transfer drum in order to obtain respective tubular sleeves.

Delving deeper into the details, each spindle comprises a substantially cylindrical outer wall with a determined diameter that is substantially equal to the preset diameter of the label being formed, around which is wound each portion of plastic film so that a first longitudinal edge of the portion of plastic film is partially overlapping the opposite edge of the portion in an overlap region, so as to form the tubular sleeve.

At the overlap region, the join is usually performed using adapted bonding techniques so as to obtain a sleeve label.

Advantageously, each spindle can be provided with sealing means that are arranged to make the corresponding portion of plastic film adhere to and wrap around the cylindrical wall.

By way of example, such sealing means can be constituted by a plurality of holes, defined on the cylindrical wall, through which air is sucked into the spindle from outside.

Each spindle can, furthermore, be provided with means of expulsion of air which are adapted to favor the removal of the sleeve label from the spindle, so as to radially expand the sleeve once the join operations are completed.

Each spindle is generally associated with a support, typically a pan, which is adapted to receive, by resting, a container to be labeled.

Specifically, fitting the sleeve label onto the container to be labeled can occur by way of a relative axial movement between the label and the container along the longitudinal axis of the latter so that the sleeve label is fitted over the container.

Such operation can be achieved by keeping, for example, the label stationary and moving the container or, more frequently, by keeping the container stationary and pushing the sleeve label downward or upward in order to make it fit over the container.

The container and the shrink sleeve label associated with it are then brought to a heating station in which the label is subjected to a heat treatment that is such as to cause its shrinking by way of heat and, therefore, the close adhesion to the lateral surface of the respective container.

A bonding technology that is currently used, which is the subject matter of European patent no. EP1954572 by the same applicant, involves the use of a laser beam in order to weld the overlapping longitudinal edges of the label.

Performing the bonding of the film in order to obtain the labels presents some difficulties, however.

Firstly the process conditions must be controlled with great precision because there is a very high risk of obtaining only a partial bonding or of damaging the overlapping films.

Furthermore, it is necessary to use special films especially if the laser beam is used to perform the bonding.

This evidently determines an increase in the costs of raw materials because of the fact that the film must in fact be a specially-designed film.

Such first method involves, in substance, the production of the shrink sleeve label "in line", i.e. directly on the labeling machine.

A second method used to provide shrink sleeve labels involves the formation of a continuous tubular element by way of adhesive bonding, or more preferably welding, the longitudinal edges of a film and, then, winding the continuous tubular element onto a reel.

Differently from the first method described above, such second method involves producing the tubular element off line.

The reel on which the continuous tubular element is wound is then associated, as needed, with the labeling machine.

The continuous tubular element is unwound from the reel and, thanks to the action of cutting means, the shrink sleeve labels to be applied to the containers positioned on the carousel are produced, in sequence.

The bonding of the longitudinal edges of the film can be done using a layer of solvent.

The solvent, in fact, melts part of the material at the interface thus causing the diffusion and formation of "entanglements" between the chains in the surfaces to be joined. When the solvent evaporates, diffusing toward the core of the material, the "entanglements" remain frozen where they formed. With this technique a bond strength of up to 85%-100% of the strength of the basic polymeric material can be obtained.

The effectiveness of the bond is strictly linked to the evaporation (or diffusion) of the solvent.

With regard to the production of continuous tubular elements for obtaining shrink sleeve labels, it should be noted that it is necessary to control the amount of solvent to interpose between the longitudinal flaps of the film with extreme precision.

It should in fact be noted that, if an excessive amount of solvent is deposited, a bonding would be highly probable not just at the overlapping flaps but also toward the center of the continuous tubular body, thus rendering the continuous tubular element obtained unusable.

Precisely for this reason, an extremely thin layer of solvent is deposited between the longitudinal edges and, simultaneously, a very long bonding time is allowed for.

Furthermore, it should be noted that in many cases the solvent used to bond film, typically made of PETG, OPS or PVC, is tetrahydrofuran (THF), such as for example is described in patent application no. WO2010047905 in the name of Exxon Mobil. Such solvent, although being particularly effective for executing the bonding of films made of the above mentioned materials, is classified as a substance that is potentially harmful to health and thus, as a consequence, it is necessary to produce the continuous tubular element in environments that are not used for handling foods.

Patent document no. WO2007/087174 in the name of Gerroplast describes and illustrates a labeling machine that is provided with a device for producing shrink sleeve labels which comprises a feed reel that is designed to supply respective bands of heat-shrink film to formation spindles.

In order to obtain the bonding between the longitudinal ends of the bands of film to be overlapped, such document discloses the use of nozzles for directly spraying the solvent at the overlap region while the label is being wound on the spindle.

Such solution is evidently extremely complex in terms of construction (in that there has to be some form of tracking by the nozzle) of the region in which to spray the solvent, and is also problematic in that there is a very high risk of contaminating the outer surface of the spindle with consequent risks of gluing the label to the spindle and compromising the correct transfer onto the container.

International patent application no. WO95/27613, also in the name of Gerroplast, discloses a method in accordance with the preamble of claim 1 and generically discloses spreading adhesive or solvent at the overlap region but expressly includes, before the transfer of the label from the spindle to the container, heating the overlap region in order to enable the bonding by way of "activating" the solvent.

Lastly there is US patent application no. 4976798 which discloses the use of bonding, by way of solvent, the overlapping flaps of a band of heat-shrink film: such band however is not wound entirely on the formation spindle but partially on the spindle and partially on the container to be labeled.

The aim of the present invention is to eliminate, or at least to drastically reduce, the above mentioned drawbacks in conventional methods for producing shrink sleeve labels.

Within this aim, an object of the invention is to obtain shrink sleeve labels that adhere evenly and enduringly to the container with which they are associated.

Another object of the invention is to obtain a bonding that is extremely effective against tensions (to which the label is subjected during the heat-shrinking step) but capable of facilitating removal between the overlapping portions following traction in a radial direction.

This aim and these and other objects which will become better apparent hereinafter are achieved by an invention according to the appended independent claim.

Further characteristics and advantages of the invention will become better apparent from the description of some preferred, but not exclusive, embodiments of a method, according to the invention, which are illustrated by way of non-limiting example in the accompanying drawings wherein:
- Figure 1 is a schematic view of a device for producing a shrink sleeve label which can be associated with a carousel feeder of containers to be labeled;
- Figure 2 is a schematic and enlarged-scale view of the means of winding the band of heat-shrink film around the lateral surface of the formation spindles;
- Figure 3 is an enlarged-scale view from above of a band of film wound around the lateral surface of a respective formation spindle;

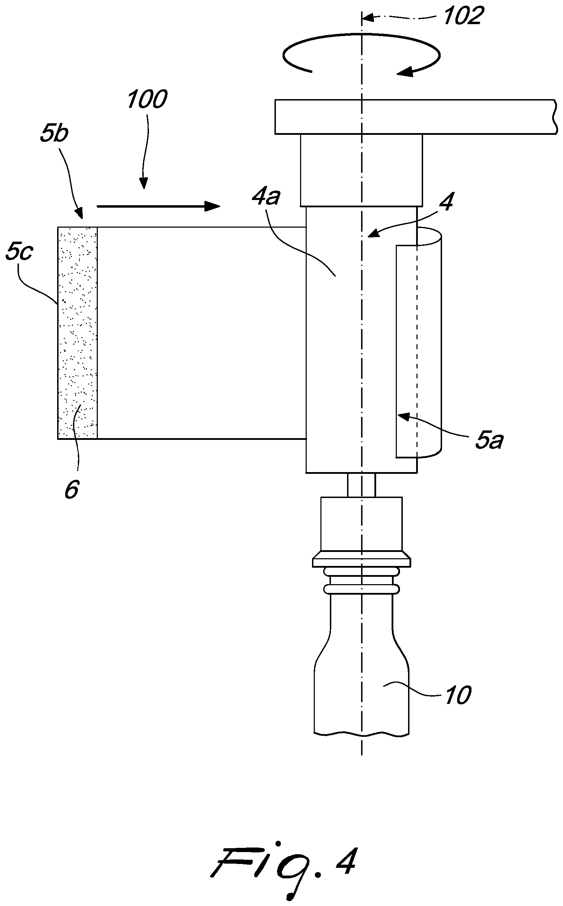

- Figure 4 is a side view showing the step of winding a band of heat-shrink film around a respective formation spindle;

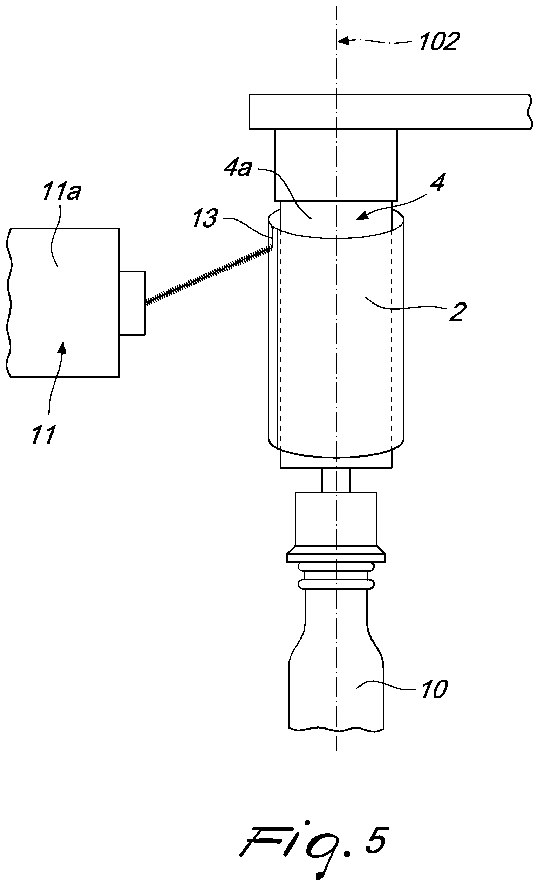

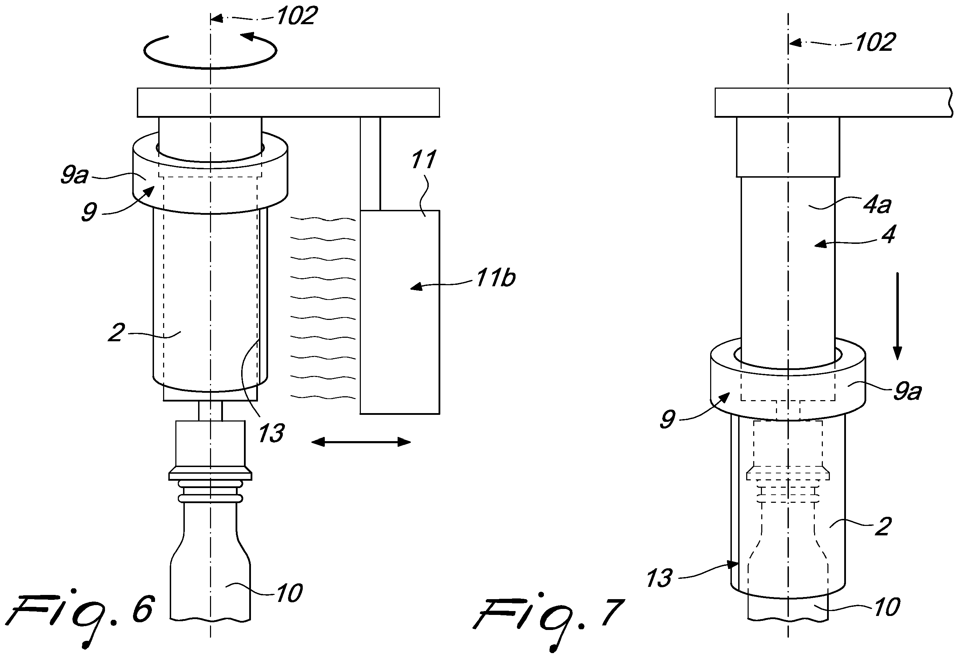

- Figures 5 and 6 are more side views of the step of bonding the first longitudinal end with the second longitudinal end;
- Figure 7 is a side view of the step of transferring the shrink sleeve label from the transfer spindle to the container to be labeled;

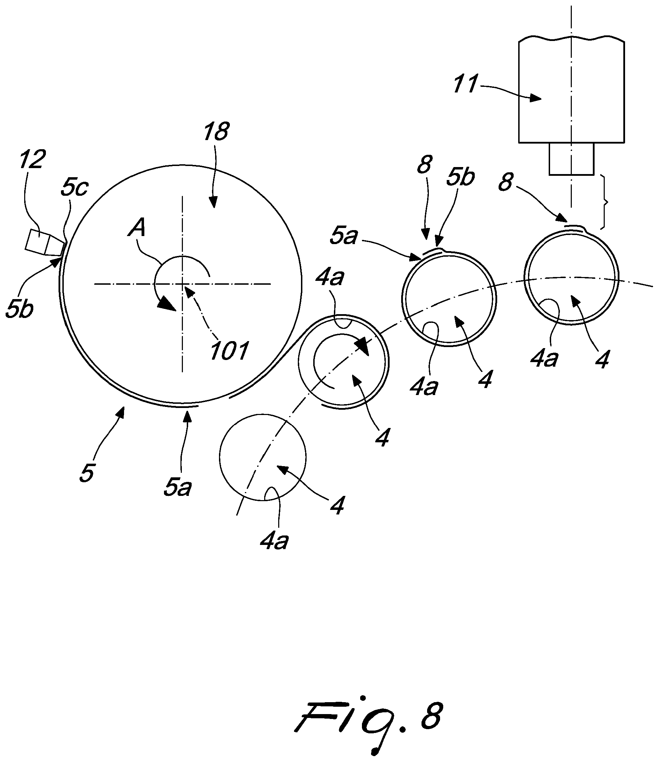

- Figure 8 is a view from above of the apparatus shown in Figure 5.

With reference to the figures, a device, generally designated by the reference numeral 1, for producing a shrink sleeve label 2 comprises at least one feed reel 3 that is designed to supply a band of heat-shrink film 5 to at least one formation spindle 4.

The device 1 has, furthermore, means 7 of winding the or each band of heat-shrink film 5 around the lateral surface 4a of a respective formation spindle 4, which are adapted to provide an overlap region 8 between a first longitudinal end 5a of the band of heat-shrink film 5 that is designed to be brought into contact with the lateral surface 4a of the formation spindle 4 and the second longitudinal end 5b of the band of heat-shrink film 5.

The device 1 has a device for dispensing 12 a layer of solvent 6 at the overlap region 8, between at least one portion of the first longitudinal end 5a and at least one portion of the second longitudinal end 5b.

Conveniently, the device for dispensing 12 can be constituted by at least one rotating cylindrical roller that transfers the solvent to the band of heat-shrink film 5 by contact.

Alternatively, the device for dispensing 12 can comprise a fixed device in contact with the flap of film (a coater) or one or more spray nozzles arranged some distance from the band of heat-shrink film 5.

The layer of solvent 6 has a thickness comprised between 0.002 mm and 0.09 mm.

Advantageously, the layer of solvent 6 has a thickness comprised between 0.002 mm and 0.05 mm.

Preferably, the layer of solvent 6 has a thickness comprised between 0.002 mm and 0.035 mm.

It seems evident that, once the bonding process is complete, following the evaporation/diffusion of the solvent the thickness of the latter is substantially equal to zero and, thus, the thickness of the overlap region 8 is equal to double the thickness of the film.

For this reason, it is emphasized that the thickness mentioned above should be understood to be when the layer of solvent 6 is deposited on the band of heat-shrink film 5.

Merely for the purposes of example, control of the thickness can be exerted by way of a doctor for adjusting the thickness of solvent that is deposited on the cylindrical roller.

Specifically, it will be possible to increase or decrease the gap between the adjustment doctor and the outer surface of the cylindrical roller if an incomplete transfer is detected of the solvent from the cylindrical roller to the band of heat-shrink film.

According to a variation of embodiment, the solvent is additivated with a polymer that is compatible with or of the same species as at least one polymer that constitutes the surfaces between which the layer of solvent 6 is interposed.

In particular, the compatible polymer, or the polymer of the same species, has a percentage by weight with respect to the solvent which is comprised between 0% and 35%.

Advantageously, the solvent is a terpene and, in particular, it is selected from the group comprising:
- alpha-pinene, both in the levorotatory(-) alpha-pinene form and in the dextrorotatory(+) alpha-pinene form;
- beta-pinene, both in the levorotatory(-) beta-pinene form and in the dextrorotatory(+) beta-pinene form;
- camphene;
- limonene, both in the levorotatory(-) limonene form and in the dextrorotatory(+) limonene form;
- 4-isopropyltoluene (known commercially as p-Cymene);
or mixtures thereof.

Preferably, the solvent used is alpha-pinene, both in the levorotatory(-) alpha-pinene form and in the dextrorotatory(+) alpha-pinene form or mixtures thereof.

Conveniently, the compatible polymer to additivate to the solvent, as a function of the layer to be bonded, is selected from the group comprising:
- COC (Cyclic Olefin Copolymer);
- SBC (Poly Styrene Butadiene Copolymer);
- PS (Poly Styrene);
- COP (Cyclic Olefin Polymer).

The device 1 has, furthermore, means 9 of transferring the sleeve label 2 that is formed on the formation spindle 4 from the formation spindle 4 proper to a container to be labeled 10.

Naturally, the container to be labeled 10 can be of any shape.

Since the transfer of the sleeve label 2 is performed approximately 1-2 seconds after the winding of the band of film 5 around the formation spindle 4, it is necessary to control the amount and the type of solvent to be dosed with great precision because, during the transfer, it is necessary for the longitudinal ends 5a and 5b to already be sufficiently bonded to ensure that the sleeve label that has just been formed does not open under the effect of the impact with the transfer means 9.

It has been found that by using a method according to the invention, it is possible to transfer the label formed on the spindle as soon as 0.5 seconds after the completion of the winding step.

In some applications and with particular types of labeling machine, it is however possible to transfer the label formed by the formation spindle to the container after a considerable number of seconds have elapsed (for example of the order of ten).

Advantageously, the device 1 has presser means 30 that engage against the outer surface of the sleeve label 2 that is wound around the formation spindle 4 in order to allow an optimal adhesion between the first longitudinal end 5a and the second longitudinal end 5b thanks to the action of the layer of solvent 6 arranged at the overlap region 8.

Merely for the purposes of example, the presser means 30 can be constituted by idle rubberized rollers or by brushes that are arranged parallel to the movement direction of the formation spindle 4.

According to a further aspect of the present invention, the device 1 is associated with a device 11 for welding the first longitudinal end 5a with the second longitudinal end 5b of the band of heat-shrink film 5 wound on the respective formation spindle 4 in order to obtain a join portion 13 that extends transversely with respect to the direction of longitudinal extension 100 of the band of heat-shrink film 5 and at the overlap region 8.

The welding device 11 can be provided in different forms. Merely for the purposes of example, such welding device 11 can be constituted by welding means selected from the group that comprises:
- A laser welding device 11a;
- An infrared welding device;
- A sealing bar welding device 11b;
- An ultrasound welding device.

Thanks to the action of the welding device 11 it is possible to accelerate the process of evaporation/diffusion of the solvent so as to ensure, in an extremely short time, the adhesion between the longitudinal ends 5a and 5b of the band of film 5.

Advantageously, the device 1 has, between the feed reel 3 and the winding means 7, means for cutting 14, which are adapted to cut through a continuous film 15 of polymeric heat-shrink material being unwound from the feed reel 3 in order to provide the bands of heat-shrink film 5.

Delving deeper into the details, the device 1 is provided with means 16 of feeding the bands of film 5 to the winding means 7 and, consequently, to the formation spindles 4.

According to a preferred disclosure, such feeding means 16 can be provided by way of an unwinding element that is constituted, for example, by a transfer drum 18 that unwinds the feed reel 3 of continuous film 15.

Conveniently, the feeding means 16 comprise the means for cutting 14 as well, which, as explained previously, are adapted to cut through the continuous film 15 being unwound from the feed reel 3 in order to provide the bands of heat-shrink film 5 that will subsequently be used to form the shrink sleeve 2.

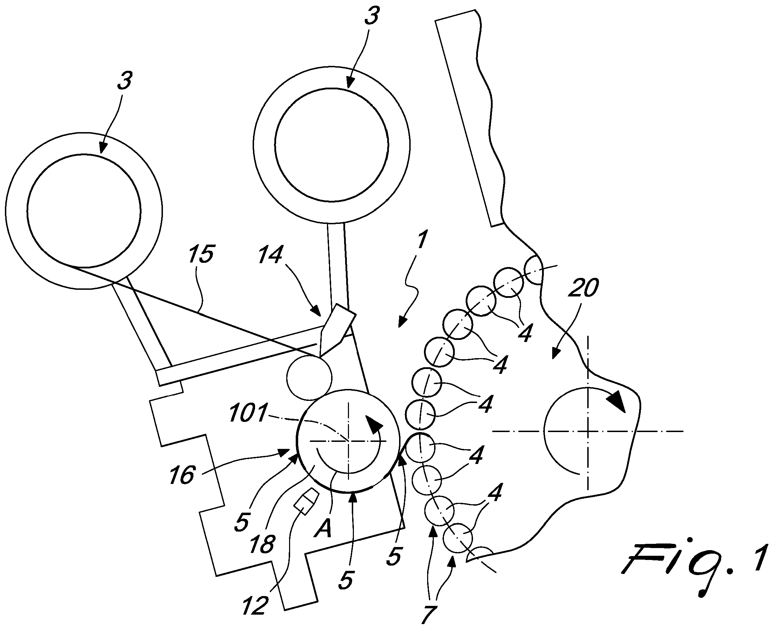

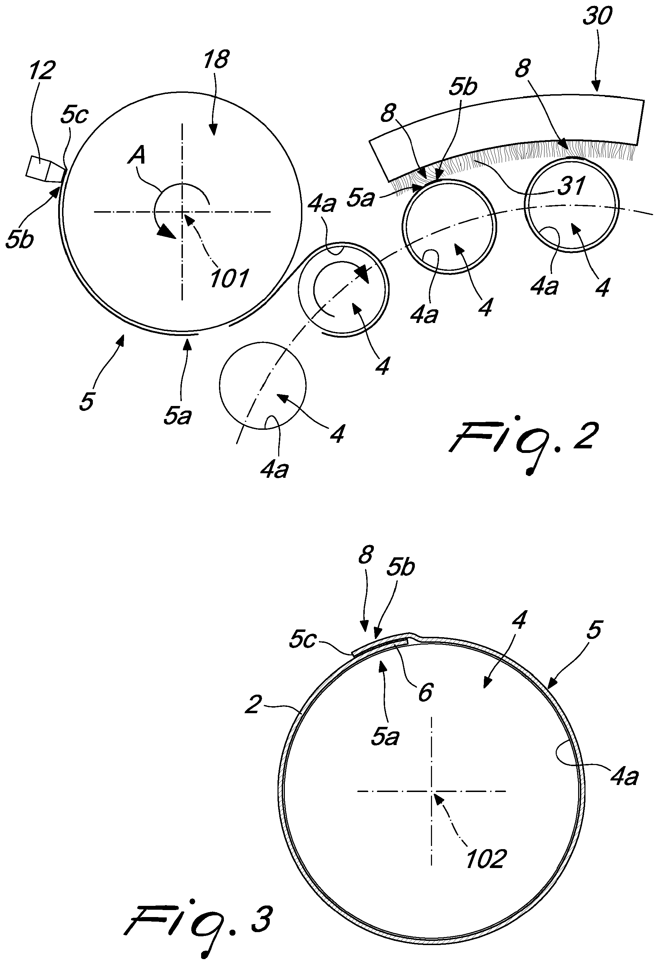

As shown in Figures 1 and 2, the transfer drum 18 can rotate about a respective movement axis 101 according to a rotation direction indicated with the letter A.

According to a practical disclosure, the transfer drum 18 has, in a way that is known per se, a cylindrical side wall on which are provided a plurality of holes that are connected to a pneumatic device that is adapted to suck air into the transfer drum 18 or to expel air from the transfer drum 18, through these holes, as a function of the angular position assumed by the holes, during the rotation of the transfer drum 18, with respect to the movement axis 101.

The formation spindle or spindles 4 that constitute the winding means 7 are oriented, with their respective axes 102, substantially parallel to the movement axis 101 of the transfer drum 18 and can engage, on their lateral surface 4a, with the band of heat-shrink film 5 that is made in each instance available by the transfer drum 18 when, by rotating around the carousel 20, they are brought into position facing the transfer drum 18.

The formation spindles 4 are, furthermore, rotationally actuated, about the corresponding axis 102, in order to perform the winding, on their lateral surface 4a, of the bands of heat-shrink film 5 taken from the transfer drum 18.

In order to ensure an optimal snugness of fit of the bands of heat-shrink film 5 on the lateral surface 4a of the formation spindles 4, means are provided for suction of the air through a plurality of openings that are defined in the lateral surface 4a of the formation spindles 4.

The means 9 of transferring the sleeve label 2 formed by the formation spindle 4 to a container to be labeled 10 can be, for example, constituted by a pusher ring 9a that is moved coaxially to the respective formation spindle 4 in order to push the sleeve label 2 that is wound thereon toward the container to be labeled 10 which is positioned, in the embodiment shown, below the formation spindle 4.

In order to facilitate such operation, the action of the suction means acting on the formation spindle 4 must be interrupted, and the means of expulsion of air from its openings arranged on its lateral surface 4a must be activated, so as to obtain a separation of the sleeve label 2 from the lateral surface 4a of the formation spindle 4 over which it is fitted.

Obviously, there is no reason why the formation spindle 4, or possibly other types of winding means that perform the same function, cannot be arranged below the container to be labeled 10.

According to a further aspect, the present invention relates to a method of producing shrink sleeve labels 2 in accordance with claim 1 and which comprises:
- A step of unwinding a feed reel 3 of heat-shrink film;
- A step of separating at least one band of heat-shrink film 5 from the feed reel 3;
- A step of feeding the band of heat-shrink film 5 to a formation spindle 4;
- A step of winding the band of heat-shrink film 5 around the formation spindle 4 in order to provide a sleeve label 2, there being provided an overlap region 8 between a first longitudinal end 5a of the band of heat-shrink film 5 in contact with the formation spindle 4 and the second longitudinal end 5b of the band of heat-shrink film 5;
- A step of transferring the sleeve label 2 that is formed around the respective formation spindle 4 from the formation spindle 4 to a container to be labeled 10;
the method comprising, furthermore, a step of interposing a layer of solvent 6 at the overlap region 8, between at least one portion of the first longitudinal end 5a and at least one portion of the second longitudinal end 5b.

The layer of solvent 6 has a thickness comprised between 0.002 mm and 0.035 mm.

Conveniently, the step of transferring the sleeve label 2 that is formed around the respective formation spindle 4 from the formation spindle 4 to a container to be labeled 10 is performed within a timespan that can vary as a function of the type of labeling machine from the end of the step of winding the band of heat-shrink film 5 around the formation spindle 4 in order to provide the sleeve label 2.

Preferably, the time span that elapses between the end of the winding step and the start of the transfer step is comprised between 0.1 seconds and 10 seconds.

Conveniently, the time span that elapses between the end of the winding step and the start of the transfer step is comprised between 0.2 seconds and 2 seconds, preferably between 0.5 seconds and 2 seconds.

The interposition step is performed between the separation step and the feeding step.

According to a possible variation of embodiment, the solvent is additivated with a polymer that is compatible with or of the same species as at least one polymer that constitutes the surfaces between which the layer of solvent is interposed.

In particular, the compatible polymer, or the polymer of the same species, has a percentage by weight with respect to the solvent which is comprised between 0% and 35%.

Advantageously, the solvent is a terpene and, in particular, it is selected from the group comprising:
- alpha-pinene, both in the levorotatory(-) alpha-pinene form and in the dextrorotatory(+) alpha-pinene form;
- beta-pinene, both in the levorotatory(-) beta-pinene form and in the dextrorotatory(+) beta-pinene form;
- camphene;
- limonene, both in the levorotatory(-) limonene form and in the dextrorotatory(+) limonene form;
- 4-isopropyltoluene (known commercially as p-Cymene);
or mixtures thereof.

Preferably, the solvent used is alpha-pinene, both in the levorotatory(-) alpha-pinene form and in the dextrorotatory(+) alpha-pinene form.

In the choice of suitable solvent, it is possible to use the Hansen theory and the quantitative evaluations.

Such theory is described in:
1. Hansen, C.M., The Three Dimensional Solubility Parameter and Solvent, Diffusion Coefficient, Their Importance in Surface Coating Formulation, Doctoral dissertation, Danish Technical Press, Copenhagen, 1967.
2. Hansen solubility parameters : a user's handbook. -- 2nd and. / edited by Charles Hansen.
   p. cm. Rev. ed. of: Hansen solubility parameters / Charles M. Hansen. C2000. Includes bibliographical references and index. ISBN 0-8493-7248-8. 2007 by Taylor & Francis Group, LLC
   Further information about using the Hansen theory and selecting liquids that can solubilize the polymers of the labels can be found in:
3. Barton, A.F.M., Handbook of Solubility Parameters and Other Cohesion Parameters, CRC Press, Boca Raton, FL, 1983; 2nd ed., 1991.
4. Barton, A.F.M., Handbook of Polymer-Liquid Interaction Parameters and Solubility Parameters, CRC Press, Boca Raton, FL, 1990.

Conveniently, the compatible polymer to additivate to the solvent, as a function of the layer to be bonded, is selected from the group comprising:
- COC (Cyclic Olefin Copolymer);
- SBC (Poly Styrene Butadiene Copolymer);
- PS (Poly Styrene);
- COP (Cyclic Olefin Polymer).

In particular, it is possible for the layer of solvent 6 to be arranged on the face of the second longitudinal end 5b that is intended to be brought against the first longitudinal end 5a so as to provide a stable connection between the free edge 5c of the second longitudinal end 5b and the first longitudinal end 5a.

Conveniently, downstream of the step of winding the band of heat-shrink film 5 around the formation spindle 4, there is a step that consists of pressing the second longitudinal end 5b against the first longitudinal end 5a so as to optimize the adhesion between the two ends 5a and 5b at the overlap region 8.

Such step can be, for example, achieved by using presser means 30, which are intended to engage against the outer surface of the sleeve label 2 that is wound around the formation spindle 4 in order to enable an optimal adhesion between the first longitudinal end 5a and the second longitudinal end 5b.

In this regard, the presser means 30 can be constituted by idle rubberized rollers or by brushes that are arranged parallel to the movement direction of the formation spindle 4.

Conveniently, according to a possible variation, the method involves a step of welding the first longitudinal end 5a with the second longitudinal end 5b of the band of heat-shrink film 5 wound on the formation spindle 4 in order to obtain a join portion 13 that extends transversely with respect to the direction of longitudinal extension 100 of the band of heat-shrink film 5 and arranged at the overlap region 8.

For the purposes of example, the welding step comprises laser welding, infrared welding, sealing bar welding or an ultrasound welding device.

According to a first embodiment, the step of separating the band of heat-shrink film 5 from the feed reel 3 comprises a step of cutting a continuous film 15 that is unwound from the feed reel 3 and the subsequent step of transferring the bands of heat-shrink film 5 thus obtained to the winding means 7.

In particular, the cutting step is performed at cutting areas that are defined on the continuous film 15 that is unwound from the feed reel 3.

After the step of transferring the sleeve label 2 that is formed around the respective formation spindle 4 from the formation spindle 4 to a container to be labeled 10, there is a step of sending the container 10 on which the sleeve label 2 has been transferred to a heating tunnel.

Advantageously, the time interval that elapses between the end of the step of transferring the sleeve label 2 to the container to be labeled 10 and the introduction of the container to be labeled 10 into the heating tunnel is less than 2 minutes and, preferably, is comprised between 0.1 seconds and 100 seconds.

Typically, if the heating tunnel if of the steam type, the temperature inside it is approximately 100°C while, if the heating tunnel is a hot air tunnel, its temperature is approximately 130°C.

It has been verified experimentally that, inside the heating tunnel, in addition to the heat-shrinking of the sleeve label 2, the completion of the evaporation of the solvent is obtained as well.

Turning to the solvents used, it should be noted that solvents of natural origin can be favored, originating from renewable and obviously non-harmful sources or, as in the case of alpha-pinene, solvents obtained by synthesis but which are entirely similar to those of natural origin.

With reference to the amount and type of solvent used, it is emphasized that this amount and type must not be effective on labels/sleeves made of PET (poyethylenterephtalate) or PETG (poyethylenterephtalateglycol) at the temperatures at which it is applied. The reason for this is that containers 10 are usually made of PET. If the solvent should melt the PET, this, although being safe, would be adapted to diffuse through the containers 10, risking entering the liquid inside.

The same is true for HDPE (high density polyethylene), PP (polypropylene), CoPP (PP copolymers): some bottles in fact are made with these materials as well, in the beverage, food and dairy sectors but also in non-food sectors: the choice of solvent is made so that it is not compatible with these materials for the reasons stated above.

The film used, which can be single-layer, is preferably multi-layer according to an ABA structure; in some cases, the layers may be five in number (for example the intermediate layers can be adhesive layers between the innermost and outermost layers).

Typically, the film has an MD (machine direction) orientation during its production.

It is evident that the outer layers are the ones that perform the activity of adhesion and which can be attacked by the solvent (or possibly by the solvent/polymer mixture).

The innermost layer cannot be attacked or attackable by the solvent and, therefore, it is possible to obtain labels that are mostly made with material that is not attacked or attackable by the solvent.

In this manner shrink sleeve labels can also be obtained with materials that must not be attacked by solvents (PET, PETG, HDPE, PP, CoPP): in such case it is sufficient for the layers A to be attacked by the solvent.

Preferably, the density of the label is lower than that of the waters of the apparatuses for separating and recycling the bottles, so as to separate the PET of the bottles from the material of the labels in such apparatuses.

For all the examples a layer of solvent 6 was deposited at the overlap region 8 by way of a cylindrical roller.

The tables give the characteristics of the film and of the solvent used and the outcomes of the join.

### EXAMPLE 1

| | |
|---|---|
| Heat-shrink film | Triple-layer COC/LDPE/COC |
| Total thickness of film | 50 micrometers |
| Solvent used | Alpha-pinene |
| Solvent thickness | 0.08 mm |
| Additive | NO |
| Percentage by weight of the additive with respect to the solvent | |
| Laser welding | NO |
| Percentage openings after the labeled container passes through the steam tunnel at 100°C | No openings |
| Quality of the join | No defects |

### EXAMPLE 2

| | |
|---|---|
| Heat-shrink film | Triple-layer COC/LDPE/COC |
| Total thickness of film | 50 micrometers |
| Solvent used | Alpha-pinene |
| Solvent thickness | 0.04 mm |
| Additive | COC |
| Percentage by weight of the additive with respect to the solvent | 5% |
| Laser welding | YES |
| Percentage openings after the labeled container passes through the steam tunnel at 100°C | No openings |
| Quality of the join | No defects |

### EXAMPLE 3

| | |
|---|---|
| Heat-shrink film | Triple-layer COC/LDPE/COC |
| Total thickness of film | 50 micrometers |
| Solvent used | Alpha-pinene |
| Solvent thickness | 0.02 |
| Additive | COC |
| Percentage by weight of the additive with respect to the solvent | 10% |
| Laser welding | NO |
| Percentage openings after the labeled container passes through the steam tunnel at 100°C | No openings |
| Quality of the join | No defects |

### EXAMPLE 4

| | |
|---|---|
| Heat-shrink film | Triple-layer COC/LDPE/COC |
| Total thickness of film | 50 micrometers |
| Solvent used | Alpha-pinene |
| Solvent thickness | 0.005 mm |
| Additive | NO |
| Percentage by weight of the additive with respect to the solvent | |
| Laser welding | YES |
| Percentage openings after the labeled container passes through the steam tunnel at 100°C | No openings |
| Quality of the join | No defects |

### EXAMPLE 5

| | |
|---|---|
| Heat-shrink film | Triple-layer COC/LDPE/COC |
| Total thickness of film | 50 micrometers |
| Solvent used | Alpha-pinene |
| Solvent thickness | 0.05 mm |
| Additive | SBC (not compatible) |
| Percentage by weight of the additive with respect to the solvent | 10% |
| Laser welding | YES |
| Percentage openings after the labeled container passes through the steam tunnel at 100°C | Greater than 5% |
| Quality of the join | Presence of flash and slippages |

### EXAMPLE 6

| | |
|---|---|
| Heat-shrink film | Triple-layer SBC/LDPE/SBC |
| Total thickness of film | 45 micrometers |
| Solvent used | Alpha-pinene |
| Solvent thickness | 0.02 mm |
| Additive | No |
| Percentage by weight of the additive with respect to the solvent | |
| Laser welding | NO |
| Percentage openings after the labeled container passes through the steam tunnel at 100°C | No openings |
| Quality of the join | No defects |

### EXAMPLE 7

| | |
|---|---|
| Heat-shrink film | Triple-layer SBC/LDPE/SBC |
| Total thickness of film | 45 micrometers |
| Solvent used | Alpha-pinene |
| Solvent thickness | 0.04 mm |
| Additive | SBC |
| Percentage by weight of the additive with respect to the solvent | 10% |
| Laser welding | YES |
| Percentage openings after the labeled container passes through the steam tunnel at 100°C | No openings |
| Quality of the join | No defects |

The thickness 6 of the layer of solvent can be verified using various methods.

A first method involves determining the overall consumption by weight of solvent for a certain number of labels (for example of the order of thousands).

By taking account of the density of the solvent, based on the total number of the labels and as a function of the value of the area of application on each label, it is possible to obtain the thickness of the solvent applied.

A second method of verifying the thickness 6 of solvent consists of weighing the label that has just been formed (or on which the layer of solvent has just been deposited) by way of an analytic precision scales (for example with a sensitivity of at least 0.1 mg) and then comparing with the weight measured once a certain period of time has elapsed (of the order of hours or tens of hours), after which time the solvent will have completely evaporated.

In this manner it is possible to obtain the weight of the solvent applied to the label, and such weight, on the basis of the density of the solvent and of the area of application, can enable us to determine the thickness of application of the solvent.

A third verification method consists of weighing a preset number of uncut labels (for example of the order of a few tens).

Then the labels that were previously weighted are wound back on the reel, in order to make them into tubular labels which will be weighed all together.

In this case the weighings can be performed with scales that have a precision of approximately 1 mg.

By taking account of the difference in weight between the two weighings and of the total number of labels it is possible to obtain the average weight of solvent for each label.

Once the average weight of solvent for each label has been obtained, we proceed similarly to the first two methods.

This technique makes it possible to reduce the uncertainty in verifying the thickness which derives from the tolerance of the label thickness.

In practice it has been found that in all the embodiments the invention is capable of fully achieving the set aim and objects.

In particular, the evaporation of the solvent arranged at the overlap region makes it possible to stably connect, after winding the band of heat-shrink film 5 on the formation spindle 4, the first longitudinal end 5a with the second longitudinal end 5b thus guaranteeing a sufficient hold of the join even during the subsequent heat-shrinking step.

If it is considered desirable to also execute a weld between the first longitudinal end 5a and the second longitudinal end 5b, then it has been found that the presence of the layer of solvent 6 at the overlap region 8, and in particular between the join portion 13 and the free edge 5c of the second longitudinal end 5b, enables a close adhesion of all of the second longitudinal edge 5b to the container 10 during the heat-shrinking step as well and thus a complete snugness of fit of the shrink sleeve labels 2 on the containers 10.

Thus it has been found that using the method described above, labels are obtained which are free from protruding ridges or with edges that are not perfectly fixed to the label itself.

Therefore, the labels thus obtained have an appearance that is considerably improved over conventional labels.

The invention, thus conceived, is susceptible of numerous modifications and variations, all of which are within the scope of the appended claims.

In practice the materials employed, provided they are compatible with the specific use, and the dimensions and shapes, may be any according to requirements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A method of producing shrink sleeve labels (2), which comprises:
- A step of unwinding a feed reel (3) of heat-shrink film (15);
- A step of separating by way of cutting means (14) at least one band (5) of heat-shrink film (15) from said feed reel (3);
- A step of feeding by way of feeding means (16) said at least one band (5) of heat-shrink film (15) to a formation spindle (4);
- A step of winding by way of winding means (7) said band of heat-shrink film (5) around said formation spindle (4) in order to provide a sleeve label (2), there being provided an overlap region (8) between a first longitudinal end (5a) of said band of heat-shrink film (5) in contact with said formation spindle (4) and the second longitudinal end (5b) of said band of heat-shrink film (5),
- A step of transferring by way of transferring means (9) said sleeve label (2) that is formed around said formation spindle (4) from said formation spindle (4) to a container to be labeled (10);
said method comprising, between said separating step and said feeding step, a step of interposing a layer of solvent (6) that is deposited by way of a device (12) for dispensing the layer of solvent (6) at said overlap region (8), between at least one portion of said first longitudinal end (5a) and at least one portion of said second longitudinal end (5b),
**characterized in that**
said deposited layer of solvent (6) has a thickness comprised between 0.002 mm and 0.035 mm,
**and in that** the method further comprises
- A step of verifying the thickness of the layer of solvent (6) deposited at said overlap region (8).

2. The method of producing shrink sleeve labels (2) according to claim 1, **characterized in that** it comprises a step of welding said first longitudinal end (5a) with said second longitudinal end (5b) of said band of heat-shrink film (5) wound on said formation spindle (4) in order to obtain a join portion (13) that extends transversely with respect to the direction of longitudinal extension (100) of said band of heat-shrink film (5) and at said overlap region (8).

3. The method of producing shrink sleeve labels (2) according to one or more of the preceding claims, **characterized in that** said interposition step is performed by a dispensing device (12) which is selected from the group comprising:
- at least one rotating cylindrical roller that is adapted to transfer the solvent to said band of heat-shrink film (5) by contact;
- a fixed coater device in contact with the flap of heat-shrink film (5);
- one or more spray nozzles arranged some distance from the band of heat-shrink film (5);
or similar devices.

4. The method of producing shrink sleeve labels (2) according to claim 2, **characterized in that** said welding step comprises laser welding, infrared welding, sealing bar welding, and an ultrasound welding device.

5. The method of producing shrink sleeve labels according to one or more of the preceding claims, **characterized in that** it comprises, after said step of winding the band of heat-shrink film (5) around the formation spindle (4), a step that consists of pressing said second longitudinal end (5b) against the first longitudinal end (5a) in order to optimize the adhesion between the two ends (5a, 5b) at said overlap region (8).

6. The method of producing shrink sleeve labels (2) according to one or more of the preceding claims, **characterized in that** said solvent is additivated with a polymer that is compatible with or of the same species as at least one polymer that constitutes the surfaces between which said solvent is interposed, said compatible polymer having a percentage by weight with respect to said solvent which is comprised between 0% and 35%.

7. The method of producing shrink sleeve labels (2) according to one or more of the preceding claims, **characterized in that** said solvent is selected from the group comprising:
- alpha-pinene, both in the levorotatory(-) alpha-pinene form and in the dextrorotatory(+) alpha-pinene form;
- beta-pinene, both in the levorotatory(-) beta-pinene form and in the dextrorotatory(+) beta-pinene form;
- camphene;
- limonene, both in the levorotatory(-) limonene form and in the dextrorotatory(+) limonene form;
- 4-isopropyltoluene;
or mixtures thereof.

8. The method of producing shrink sleeve labels (2) according to one or more of the preceding claims, **characterized in that** said compatible polymer is selected from the group comprising:
- COC (Cyclic Olefin Copolymer);
- SBC (Poly Styrene Butadiene Copolymer);
- PS (Poly Styrene);
- COP (Cyclic Olefin Polymer).

9. The method of producing shrink sleeve labels (2) according to one or more of the preceding claims wherein said step of verifying the thickness of the layer of solvent (6) deposited at said overlap region (8) comprises one of:
- determining the overall consumption by weight of solvent for a certain number of labels (2), for example of the order of thousands, and taking account of the density of the solvent, based on the total number of the labels (2) and as a function of the value of the area of application on each label, obtaining the thickness of the solvent layer (6) applied;
- weighing the label (2) that has just been formed, or on which the layer of solvent (6) has just been deposited, by way of an analytic precision scales, for example with a sensitivity of at least 0.1 mg, and then comparing it with the weight measured once a certain period of time has elapsed, of the order of hours or tens of hours, after which time the solvent will have completely evaporated to so obtain the weight of the solvent applied to the label (2), such obtained weight of applied solvent, and on the basis of the density of the solvent and of the area of application, determining the thickness of the layer of solvent (6) applied; and
- weighing, for example with scales that have a precision of approximately 1 mg, a preset number of uncut label bands (5), for example of the order of a few tens, wind back on the feed reel (3) the uncut label bands (5) that were previously weighted in order to make them into tubular labels (2) weighing then all together the tubular labels (2), obtaining the average weight of solvent for each label (2) taking account of the difference in weight between the two weighings and of the total number of labels, and on the basis of the density of the solvent and of the area of application, determining the thickness of the layer of solvent (6) applied .

## Patentansprüche

1. Ein Verfahren zur Herstellung von Schrumpffolien-Etiketten (2), das Folgendes umfasst:
- einen Schritt des Abwickelns einer Abwickelrolle (3) von Wärmeschrumpffolie (15);
- einen Schritt des Abtrennens, durch Schneidemittel (14), von mindestens einem Streifen (5) von Wärmeschrumpffolie (15) von der Abwickelrolle (3);
- einen Schritt des Zuführens, durch Zuführmittel (16), des mindestens einen Streifens (5) von Wärmeschrumpffolie (15) an eine Formspindel (4);
- einen Schritt des Wickelns, durch Wickelmittel (7), des Streifens von Wärmeschrumpffolie (5) um die Formspindel (4), um ein Folienetikett (2) herzustellen, wobei ein Überlappungsbereich (8) zwischen einem ersten Längsende (5a) des Streifens von Wärmeschrumpffolie (5) in Kontakt mit der Formspindel (4) und dem zweiten Längsende (5b) des Streifens von Wärmeschrumpffolie (5) besteht;
einen Schritt des Übertragens, durch Übertragungsmittel (9), des Folienetiketts (2), das um die Formspindel (4) geformt ist, von der Formspindel (4) an einen zu etikettierenden Behälter (10);
wobei das Verfahren zwischen dem Trennschritt und dem Zuführschritt einen Schritt des Einfügens einer Schicht von Lösungsmittel (6) umfasst, die durch eine Vorrichtung (12) zur Abgabe der Schicht Lösungsmittel (6) an dem Überlappungsbereich (8), zwischen mindestens einem Abschnitt des ersten Längsendes (5a) und mindestens einem Abschnitt des zweiten Längsendes (5b) aufgetragen wird;
**dadurch gekennzeichnet, dass**
die aufgetragene Schicht Lösungsmittel (6) eine Dicke zwischen 0,002 mm und 0,035 mm hat,
und dadurch, dass das Verfahren weiter Folgendes umfasst:
- einen Schritt des Überprüfens der Dicke der Schicht Lösungsmittel (6), die an dem Überlappungsbereich (8) aufgetragen wurde.

2. Das Verfahren zur Herstellung von Schrumpffolien-Etiketten (2) gemäß Anspruch 1, **dadurch gekennzeichnet, dass** es einen Schritt des Verschweißens des ersten Längsendes (5a) mit dem zweiten Längsende (5b) des Streifens von Wärmeschrumpffolie (5), der auf die Formspindel (4) gewickelt ist, umfasst, um einen Verbindungsabschnitt (13) zu erhalten, der sich quer zur Richtung der Längserstreckung (100) des Streifens von Wärmeschrumpffolie (5) und an dem Überlappungsbereich (8) erstreckt.

3. Das Verfahren zur Herstellung von Schrumpffolien-Etiketten (2) gemäß einem oder mehreren der obigen Ansprüche, **dadurch gekennzeichnet, dass** der Einfügungsschritt von einer Abgabevorrichtung (12) durchgeführt wird, die gewählt ist aus der Gruppe umfassend:
- mindestens eine sich drehende Zylinderrolle, die ausgebildet ist, um das Lösungsmittel durch Kontakt auf den Streifen von Wärmeschrumpffolie (5) aufzutragen;
- eine feste Auftragsvorrichtung in Kontakt mit dem Flügel von Wärmeschrumpffolie (5);
- eine oder mehrere Sprühdüsen, angeordnet in einigem Abstand von dem Streifen von Wärmeschrumpffolie (5); oder ähnliche Vorrichtungen.

4. Das Verfahren zur Herstellung von Schrumpffolien-Etiketten (2) gemäß Anspruch 2, **dadurch gekennzeichnet, dass** der Schweißschritt Laserschweißen, Infrarotschweißen, Siegelleistenschweißen und eine Ultraschallschweißvorrichtung umfasst.

5. Das Verfahren zur Herstellung von Schrumpffolien-Etiketten gemäß einem oder mehreren der obigen Ansprüche, **dadurch gekennzeichnet, dass** es nach dem Schritt des Wickelns des Streifens von Wärmeschrumpffolie (5) um die Formspindel (4) einen Schritt umfasst, der in dem Schritt des Pressens des zweiten Längsendes (5b) gegen das erste Längsende (5a) besteht, um die Haftung zwischen den beiden Enden (5a, 5b) an dem Überlappungsbereich (8) zu optimieren.

6. Das Verfahren zur Herstellung von Schrumpffolien-Etiketten (2) gemäß einem oder mehreren der obigen Ansprüche, **dadurch gekennzeichnet, dass** dem Lösungsmittel ein Polymer zugesetzt ist, das verträglich mit oder von derselben Art ist wie mindestens ein Polymer aus dem die Oberflächen bestehen, zwischen denen das Lösungsmittel angebracht wird, wobei das kompatible Polymer einen Massenanteil in Bezug auf das Lösungsmittel zwischen 0% und 35% hat.

7. Das Verfahren zur Herstellung von Schrumpffolien-Etiketten (2) gemäß einem oder mehreren der obigen Ansprüche, **dadurch gekennzeichnet, dass** das Lösungsmittel gewählt ist aus der Gruppe umfassend:
- alpha-Pinen, sowohl in der linksdrehenden(-) alpha-Pinenform als auch in der rechtsdrehenden(+) alpha-Pinenform;
- beta-Pinen, sowohl in der linksdrehenden(-) beta-Pinenform als auch in der rechtsdrehenden (+) beta-Pinenform;
- Camphen;
- Limonen, sowohl in der linksdrehenden(-) Limonenform als auch in der rechtsdrehenden(+) Limonenform;
- 4-Isopropyltoluol;
oder Mischungen davon.

8. Das Verfahren zur Herstellung von Schrumpffolien-Etiketten (2) gemäß einem oder mehreren der obigen Ansprüche, **dadurch gekennzeichnet, dass** das kompatible Polymer gewählt ist aus der Gruppe, die Folgendes umfasst:
- COC (Cyclic Olefin Copolymer, zyklisches Olefin-Copolymer);
- SBC (Poly Styrene Butadiene Copolymer, Polystyrol Butadien-Copolymer);
- PS (Polystyrol);
- COP (Cyclic Olefin Polymer, zyklisches Olefinpolymer).

9. Das Verfahren zur Herstellung von Schrumpffolien-Etiketten (2) gemäß einem oder mehreren der obigen Ansprüche, wobei der Schritt des Überprüfens der Dicke der Lösungsmittelschicht (6), die auf dem Überlappungsbereich (8) aufgetragen ist, eines von Folgendem umfasst:
- dem Bestimmen des Gesamtverbrauchs an Gewicht Lösungsmittel für eine bestimmte Anzahl von Etiketten (2), zum Beispiel in der Größenordnung von 1000 unter Berücksichtigung der Dichte des Lösungsmittels, basierend auf der Gesamtzahl der Etiketten (2) und als Funktion des Werts der Auftragsfläche auf jedes Etikett, wodurch die Dicke der aufgetragenen Lösungsmittelschicht (6) erhalten wird;
- dem Wiegen des Etiketts (2) das soeben geformt wurde, oder auf dem die Lösungsmittelschicht soeben aufgetragen wurde, mit einer analytischen Präzisionswaage, zum Beispiel mit einer Empfindlichkeit von mindestens 0,1 mg, und dem anschließenden Vergleichen mit dem Gewicht, das gemessen wird, wenn ein bestimmter Zeitraum abgelaufen ist in der Größenordnung von Stunden oder Dutzenden von Stunden, wonach das Lösungsmittel vollständig verdunstet sein wird, um das Gewicht des auf das Etikett (2) aufgetragenen Lösungsmittels zu erhalten, so erhaltenes Gewicht des aufgetragenen Lösungsmittels, und auf der Basis der Dichte des Lösungsmittels und der Auftragsfläche Bestimmen der Dicke der aufgetragenen Lösungsmittelschicht (6); und
- dem Wiegen, zum Beispiel mit einer Waage, die eine Präzision von ungefähr 1 mg hat, einer vordefinierten Anzahl nicht geschnittener Etikettenstreifen (5), zum Beispiel in der Größenordnung von wenigen Dutzend, dem Wiederaufwickeln der nicht geschnittenen Etikettenstreifen (5), die zuvor gewogen wurden, auf die Abwickelrolle (3), um röhrenförmige Etiketten (2) aus ihnen zu machen, wobei dann alle röhrenförmigen Etiketten (2) gemeinsam gewogen werden, wodurch das Durchschnittsgewicht an Lösungsmittel für jedes Etikett (2) erhalten wird, unter Berücksichtigung des Gewichtsunterschieds zwischen den zwei Wiegevorgängen und der Gesamtzahl von Etiketten, und auf der Basis der Dichte des Lösungsmittels und der Auftragsfläche, wodurch die Dicke der aufgetragenen Lösungsmittelschicht (6) bestimmt wird.

## Revendications

1. Procédé de production d'étiquettes à manchon thermorétractable (2), qui comporte :
- une étape consistant à dérouler une bobine d'alimentation (3) d'un film thermorétractable (15),
- une étape consistant à séparer, par des moyens de coupe (14), au moins une bande (5) de film thermorétractable (15) de ladite bobine d'alimentation (3),
- une étape consistant à amener, par des moyens d'alimentation (16), ladite au moins une bande (5) de film thermorétractable (15) jusqu'à une broche de formation (4),
- une étape consistant à enrouler, par des moyens d'enroulement (7), ladite bande de film thermorétractable (5) autour de ladite broche de formation (4) afin de fournir une étiquette à manchon (2), une zone de chevauchement (8) y étant agencée entre une première extrémité longitudinale (5a) de ladite bande de film thermorétractable (5) en contact avec ladite broche de formation (4) et la seconde extrémité longitudinale (5b) de ladite bande de film thermorétractable (5),
- une étape consistant à transférer, par des moyens de transfert (9), ladite étiquette à manchon (2) qui est formée autour de ladite broche de formation (4) depuis ladite broche de formation (4) jusqu'à un contenant (10) devant être étiqueté,
ledit procédé comportant, entre ladite étape de séparation et ladite étape d'alimentation, une étape consistant à intercaler une couche de solvant (6) qui est déposée au moyen d'un dispositif (12) pour distribuer la couche de solvant (6) au niveau de ladite zone de chevauchement (8), entre au moins une partie de ladite première extrémité longitudinale (5a) et au moins une partie de ladite seconde extrémité longitudinale (5b),
**caractérisé en ce que**
ladite couche de solvant (6) déposée a une épaisseur comprise entre 0,002 mm et 0,035 mm,
et **en ce que** le procédé comporte en outre :
- une étape consistant à vérifier l'épaisseur de la couche de solvant (6) déposée au niveau de ladite zone de chevauchement (8).

2. Procédé de production d'étiquettes à manchon thermorétractable (2) selon la revendication 1, **caractérisé en ce qu'**il comporte une étape consistant à souder ladite première extrémité longitudinale (5a) avec ladite seconde extrémité longitudinale (5b) de ladite bande de film thermorétractable (5) enroulée sur ladite broche de formation (4) afin d'obtenir une partie de jonction (13) qui s'étend transversalement par rapport à la direction d'extension longitudinale (100) de ladite bande de film thermorétractable (5) et au niveau de ladite zone de chevauchement (8).

3. Procédé de production d'étiquettes à manchon thermorétractable (2) selon une ou plusieurs des revendications précédentes, **caractérisé en ce que** ladite étape d'interposition est exécutée par un dispositif de distribution (12) qui est choisi parmi le groupe comportant :
- au moins un rouleau cylindrique rotatif qui est adapté pour transférer le solvant vers ladite bande de film thermorétractable (5) par contact,
- un dispositif d'enduction fixe en contact avec le rabat de film thermorétractable (5),
- une ou plusieurs buses de pulvérisation agencées à une certaine distance de la bande de film thermorétractable (5), ou des dispositifs similaires.

4. Procédé de production d'étiquettes à manchon thermorétractable (2) selon la revendication 2, **caractérisé en ce que** ladite étape de soudage comporte un soudage au laser, un soudage par infrarouge, un soudage par mâchoires de scellage et un dispositif de soudage à ultrasons.

5. Procédé de production d'étiquettes à manchon thermorétractable selon une ou plusieurs des revendications précédentes, **caractérisé en ce qu'**il comporte, après ladite étape d'enroulement de la bande de film thermorétractable (5) autour de la broche de formation (4), une étape qui consiste à presser ladite seconde extrémité longitudinale (5b) contre la première extrémité longitudinale (5a) afin d'optimiser l'adhérence entre les deux extrémités (5a, 5b) au niveau de ladite zone de chevauchement (8).

6. Procédé de production d'étiquettes à manchon thermorétractable (2) selon une ou plusieurs des revendications précédentes, **caractérisé en ce que** ledit solvant est additionné d'un polymère qui est compatible avec au moins un polymère, ou est de la même espèce que celui-ci, qui constitue les surfaces entre lesquelles ledit solvant est intercalé, ledit polymère compatible ayant un pourcentage en poids par rapport audit solvant qui est compris entre 0 % et 35 %.

7. Procédé de production d'étiquettes à manchon thermorétractable (2) selon une ou plusieurs des revendications précédentes, **caractérisé en ce que** ledit solvant est choisi parmi le groupe comportant :
- alpha-pinène, à la fois sous la forme alpha-pinène lévogyre(-) et sous la forme alpha-pinène dextrogyre (+),
- bêta-pinène, à la fois sous la forme bêta-pinène lévogyre (-) et sous la forme bêta-pinène dextrogyre (+),
- camphène,
- limonène, à la fois sous la forme limonène lévogyre (-) et sous la forme limonène dextrogyre (+),
- 4-isopropyltoluène,
ou des mélanges de ceux-ci.

8. Procédé de production d'étiquettes à manchon thermorétractable (2) selon une ou plusieurs des revendications précédentes, **caractérisé en ce que** ledit polymère compatible est choisi parmi le groupe comportant :
- COC (copolymère de cyclo-oléfine),
- SBC (copolymère de poly(styrène-butadiène)),
- PS (polystyrène),
- COP (polymère de cyclo-oléfine).

9. Procédé de production d'étiquettes à manchon thermorétractable (2) selon une ou plusieurs des revendications précédentes, dans lequel ladite étape consistant à vérifier l'épaisseur de la couche de solvant (6) déposée au niveau de ladite zone de chevauchement (8) comporte une étape parmi :
- déterminer la consommation totale en poids de solvant pour un certain nombre d'étiquettes (2), par exemple de l'ordre de milliers, et tenir compte de la densité du solvant, sur la base du nombre total des étiquettes (2) et en fonction de la valeur de l'aire d'application sur chaque étiquette, obtenir l'épaisseur de la couche de solvant (6) appliquée,
- peser l'étiquette (2) qui vient juste d'être formée, ou sur laquelle la couche de solvant (6) vient juste d'être déposée, au moyen d'une balance de précision analytique, par exemple ayant une sensibilité d'au moins 0,1 mg, et la comparer ensuite au poids mesuré une fois qu'une certaine période de temps s'est écoulée, de l'ordre d'heures ou de dizaines d'heures, temps après lequel le solvant se sera entièrement évaporé pour obtenir ainsi le poids du solvant appliqué à l'étiquette (2), le poids ainsi obtenu de solvant appliqué, et sur la base de la densité du solvant et de l'aire d'application, déterminer l'épaisseur de la couche de solvant (6) appliquée,
et
- peser, par exemple avec une balance qui a une précision d'environ 1 mg, un nombre prédéfini de bandes d'étiquettes (5) non découpées, par exemple de l'ordre de quelques dizaines, réenrouler sur la bobine d'alimentation (3), les bandes d'étiquettes (5) non découpées qui ont été précédemment pesées afin de les transformer en étiquettes tubulaires (2), peser ensuite toutes ensemble les étiquettes tubulaires (2), obtenir le poids moyen de solvant pour chaque étiquette (2) en tenant compte de la différence de poids entre les deux pesées et du nombre total d'étiquettes, et sur la base de la densité du solvant et de la surface d'application, déterminer l'épaisseur de la couche de solvant (6) appliquée.
